# DEMANDE DE BREVET EUROPEEN

(11) **EP 3 757 921 A1**
(43) Date de publication de la demande: **30.12.2020**
(21) Numéro de dépôt: 19305832.8
(22) Date de dépôt: 25.06.2019
(51) Int. Cl.: G06Q 20/40, G07F 7/08, G06Q 20/34

(54) **PROCÉDÉ ET SYSTÈME POUR VALIDER UN ENRÔLEMENT D'UNE PERSONNE SUR UN DISPOSITIF BIOMÉTRIQUE**

(71) Demandeur: GEMALTO SA, 92190 Meudon (FR)
(72) Inventeur: FAVREAU, Valentin, 13881 GEMENOS Cedex (FR); LUCK, Xavier, 13881 GEMENOS Cedex (FR); CHAFER, Sylvain, 13881 GEMENOS Cedex (FR)
(74) Mandataire: Milharo, Emilien

(57) **Abrégé**

L'invention concerne un procédé de validation d'un enrôlement de données biométriques dans un dispositif portable (1) de saisie biométrique, le procédé mettant en oeuvre au cours de transactions avec un terminal de transaction (31, 35) :
- une première authentification réussie (210) de données biométriques d'un utilisateur par comparaison avec un modèle de référence mémorisé dans ledit dispositif,
- une seconde authentification réussie (260), utilisant des données distinctes (PIN) de celles (40) de la première authentification,
caractérisé en qu'il comprend une étape de contrôle (266) d'informations de sécurité (IS1, IS2) et/ou temporelles (T1, T2) et/ou géographiques (GPS1, GPS2) liées ou associées respectivement à chaque authentification réussie (210, 260) et une étape de validation (270) en cas de contrôle réussi.

L'invention concerne également le système correspondant.

## Description

### Domaine technique.

L'invention concerne un procédé et système pour valider un enrôlement d'une personne sur un dispositif biométrique. L'enrôlement peut avoir été initié mais non encore validé.

En particulier, la méthode utilise de préférence des transactions sans-contact et à contacts combinées ensemble.
L'invention concerne particulièrement les systèmes d'enrôlement biométrique d'utilisateur, comprenant des dispositifs biométriques et au moins un terminal de communication. Les dispositifs peuvent comprendre par exemple des cartes à puce munies de capteur ou de lecteur biométrique notamment d'empreinte digitale et le terminal peuvent être de préférence portable, comme un téléphone intelligent et avoir une fonction de communication NFC (acronyme anglais de Near Field communication signifiant communication radiofréquence par champ proche).

Parmi les dispositifs biométriques, l'invention peut concerner particulièrement les cartes à puce mais peut concerner également tout produit ou dispositif électronique qui utilise des éléments de sécurité biométriques par exemple, des clés USB, des montres, des bracelets, des objets à porter (Wearables en anglais).

### Art antérieur.

Les cartes sans-contact à capteur biométrique représentent une nouvelle génération de cartes de paiement, générant de fortes attentes des utilisateurs (porteurs, titulaires ou détenteurs) de cartes ainsi que l'intérêt des banques.

Cet intérêt s'explique par le côté pratique de telles cartes (pas besoin de mémoriser un code PIN) et de la sécurité qu'elles apportent grâce au capteur d'empreintes digitales, intégré dans la carte et utilisé pour authentifier le titulaire / utilisateur de la carte.

L'enrôlement sur une carte biométrique avec capteur sur la carte est effectué en deux étapes
- L'enrôlement physique : L'utilisateur présente son doigt plusieurs fois sur le capteur pour générer un modèle de référence pour les futures authentifications (ou comparaisons ou adéquations).
- L'enrôlement logique: consiste à vérifier que la personne qui a effectué l'enrôlement physique est véritablement le titulaire de la carte.

Sans ce dernier enrôlement, la sécurité de la carte serait faible. Tout le monde pourrait s'enrôler avec la carte de quelqu'un d'autre et l'utiliser.
C'est uniquement lorsque l'enrôlement est validé (c'est-à-dire enrôlement logique effectué) que la carte peut utiliser une fonction de vérification biométrique pour permettre une transaction électronique notamment de paiement.

L'enrôlement physique peut être effectué de plusieurs manières : au domicile, à l'aide d'un téléphone, dans une succursale de banque... ce qui le rend complexe.
Un des objectifs des cartes de paiement biométrique est d'améliorer l'expérience utilisateur en sans-contact (suppression de la limite de paiement...). L'enrôlement sur un terminal de paiement (POS) est un vrai challenge.

Alternativement, un enrôlement logique (imaginé par les inventeurs) pourrait être effectué pendant une transaction à contacts : L'utilisateur place son doigt sur le capteur de la carte tandis qu'il introduit carte dans le terminal. Si son empreinte est en adéquation avec un modèle de référence mémorisé dans la carte, le POS peut demander à l'utilisateur de saisir le PIN et si le PIN est OK, la carte peut valider l'enrôlement.

Cette solution alternative présente de l'avis des inventeurs plusieurs inconvénients : elle ne fonctionne pas si le POS requiert d'avoir la carte complètement insérée (le capteur n'étant pas accessible) et l'utilisateur doit effectuer une transaction à contacts en premier systématiquement avant une utilisation de la carte en sans-contact.

### Objectif / Problème technique

Un des objectifs de l'invention est d'améliorer l'expérience utilisateur en mode de transaction sans-contact sans limite de paiement.
L'invention vise à effectuer l'enrôlement logique (notamment sur un POS) d'une manière la plus pratique pour l'utilisateur.

L'invention vise aussi de manière générale à valider ou finaliser un enrôlement avec un meilleur niveau de sécurité.

### Résumé de l'invention

L'invention propose dans son principe de finaliser (ou valider) l'enrôlement quand deux authentifications réussies, interviennent dans un laps de temps et/ou quand des informations de sécurité sont associées à ces authentifications et que ces dernières ont pu être vérifiées par le système d'enrôlement.

De préférence, pour plus de sécurité ce laps de temps peut être très court (par exemple, moins de 5 mn, voire moins de 1 mn).

L'invention propose une configuration matérielle et logicielle du système (ou dispositif) permettant de contrôler/déterminer ce laps de temps et/ou ces informations de sécurité pour déclencher la finalisation de l'enrôlement.

L'invention propose selon le mode préféré de valider l'enrôlement logique directement à la suite d'une transaction (avec un fournisseur de service notamment bancaire, télécom ou autre) ; De préférence cette transaction peut être sans-contact pour une meilleure expérience utilisateur.

Ainsi, l'enrôlement complet (physique et logique) est plus pratique, plus rapide et plus sécurisé pour un utilisateur si l'enrôlement logique peut être effectué en toute sécurité à tout moment et de manière dé-corrélée (au moins en partie) de l'enrôlement physique.

Selon un mode particulier, quand une transaction sans-contact présente une authentification réussie de données biométriques mais est rejetée par manque de finalisation d'enrôlement logique, l'invention propose à ce moment-là de finaliser l'enrôlement logique par une seconde authentification réussie (telle qu'une vérification de code PIN à contacts ou autre) mais à condition qu'elle soit effectuée dans la foulée et/ou en vérifiant des paramètres ou informations de sécurité associées aux deux authentifications, pour maintenir un niveau de sécurité ou de confiance dans la procédure d'enrôlement.

Alternativement, l'invention prévoit d'effectuer chaque enrôlement physique de manière progressive de manière quasi-transparente pour l'utilisateur. En fait lors de chaque transaction sans-contact effectuée avec capture de données biométriques, ces dernières sont conservées en mémoire pour constituer un modèle de référence si cette capture est accompagnée (précédée ou suivie) d'une authentification réussie selon un laps de temps déterminée (dans la foulée) et/ou en vérifiant des paramètres ou informations de sécurité associées à l'authentification.

L'invention peut prévoir de considérer une certaine adéquation (30, 40 ou 60 %..) réussie d'une empreinte fraichement capturée (ou données biométriques quelconques) avec au moins une empreinte mémorisée, le modèle de référence étant en cours de constitution, comme étant satisfaisant pour considérer la dernière capture fraiche comme étant une authentification réussie.

Ainsi, il suffirait d'effectuer une seconde authentification par toute méthode (notamment code PIN) pour valider l'enrôlement physique et effectuer l'enrôlement logique, si la dernière capture fraîchement effectuée a suffisamment complété le modèle de référence.

La validation de l'enrôlement complet peut s'effectuer quand le modèle est complet et qu'une comparaison des dernières données biométriques au modèle est positif et qu'une seconde authentification (par exemple par code PIN) est réussie.

Alternativement, selon un mode moins performant également prévu par l'invention, la validation de l'enrôlement complet peut aussi s'effectuer quand le modèle est complété et qu'une seconde authentification (par exemple par code PIN) est réussie.

A cet effet, l'invention a pour objet un procédé de validation d'un enrôlement de données biométriques dans un dispositif portable (1) de saisie biométrique, le procédé mettant en oeuvre au cours de transactions avec un terminal de transaction :
- une première authentification (ou adéquation) réussie de données biométriques d'un utilisateur par comparaison avec un modèle de référence ou des données mémorisé(es) dans ledit dispositif,
- une seconde authentification réussie, utilisant des données distinctes de celles de la première authentification (ou adéquation),
Le procédé est caractérisé en qu'il comprend une étape de contrôle d'informations de sécurité et/ou temporelles et/ou géographiques liées ou associées respectivement à chaque authentification (ou adéquation) réussie et une étape de validation (ou finalisation) de l'enrôlement en cas de contrôle réussi de ces informations de sécurité.

Selon d'autres caractéristiques du procédé:
- Lesdites informations de sécurité et/ou temporelles peuvent comprendre une information d'horodatage et l'étape de contrôle peut comprendre un test pour savoir si le laps de temps séparant les première et seconde authentifications est inférieur ou égal à une durée prédéterminée ;
- Lesdites informations d'horodatage peuvent provenir du terminal et/ou d'un compteur d'horloge du dispositif, lesdites informations étant associées respectivement à des première et seconde authentifications réussies ;
- Le procédé peut comprendre une première authentification par contrôle de données biométriques et une seconde authentification par contrôle de code PIN ;
- Ladite première transaction peut être en sans-contact de préférence et la seconde transaction peut être avec contacts électriques ;
- Les informations d'horodatage peuvent comprendre l'heure et la date de la transaction et/ou des valeurs temporelles et/ou des valeurs de durée ;
- Le procédé peut comprendre une étape d'association d'information(s) de sécurité choisie(s) parmi le montant de la transaction, la devise de la transaction, un identifiant du terminal, un identifiant du marchand, le nom du marchand et sa localisation, ou une données interne au dispositif, par exemple, le compteur interne d'application ATC "Application Transaction Counter") ;
- Le terminal peut proposer une seconde transaction à contacts, en cas d'échec de ladite première transaction sans-contact du fait d'un enrôlement non encore validé et malgré une première authentification (ou adéquation) réussie ;
- Ledit dispositif peut comprendre une application bancaire EMV, une application d'enrôlement et une application de contrôle dudit laps de temps et/ou des informations ou paramètres de sécurité ;

- L'invention a également pour objet un système de validation d'un enrôlement de données biométriques, configuré de manière à correspondre au procédé.

Selon d'autres caractéristiques du système,
- Le dispositif portable de saisie biométrique peut fonctionner en sans-contact et choisi parmi une carte à puce, un appareil à puce portable, une montre électronique, un bracelet ; Une carte prise comme exemple dans la description peut équivaloir tout autre dispositif ci-dessus.
- Le terminal peut comprendre un lecteur NFC choisi parmi un téléphone mobile, une montre électronique NFC, un terminal mobile de paiement bancaire (POS), un terminal bancaire (ATM).

La solution de l'invention a l'avantage d'être valable quelle que soient les moyens (standards ou propriétaires) utilisés pour transmettre des données témoins du terminal à la carte, (par exemple dans le cas de transactions de paiement EMV, la liste de données requise est incluse dans des listes personnalisées d'objets (avec mises à jour possibles) DOLs (en anglais Data Objets Lists) retournées par la carte au terminal dans les premiers instants ou premières étapes de la transaction.

Alors, le terminal place les valeurs des données requises à leur emplacement prévu dans la liste des objets lorsqu'il demande à la carte d'effectuer la transaction.

La solution de l'invention a aussi l'avantage d'être valable quels que soient les moyens utilisés pour mémoriser les données témoins de la première transaction à l'intérieur de la carte (ou du dispositif).
Un moyen possible peut être de se baser sur le fichier historique des transactions mémorisées en mémoire permanente ou en utilisant une mémoire volatile si la carte dispose de sa propre source d'énergie (ex. batterie).

L'invention a l'avantage d'être utilisable même si les deux transactions (avec authentification) sont effectuées par des applications différentes (par exemple, l'une de paiement, l'autre de connexion internet, télécom...) dès l'instant où elles peuvent partager l'horodatage et des données témoins (ou de preuve).

L'invention a l'avantage de procurer une expérience utilisateur positive dans la validation de l'enrôlement : Il peut opérer de la même manière qu'avec une carte de paiement normale : Transaction en mode sans-contact en premier et si échec de la transaction alors le système adopte une position de repli en mode contacts.
En outre, il n'y a pas de mise à jour de terminal de paiement (POS) et le déploiement est transparent pour l'utilisateur.

L'invention permet d'utiliser un horodatage existant du terminal pendant la transaction avec le dispositif. L'invention prévoit d'effectuer une validation de l'enrôlement en exploitant l'horodatage mémorisé de de deux transactions.

L'invention permet d'effectuer en toute tranquillité, en toute autonomie, la mémorisation (ou saisie) des données biométriques (enrôlement physique) en tout lieu, notamment en dehors d'une agence, notamment au domicile; L'invention permet également de finaliser l'enrôlement ultérieurement (verrouiller l'enrôlement logique), hors agence si possible, pendant ou à l'occasion d'une transaction normale, de préférence standardisée, pendant une procédure de transaction de routine ou habituelle pour l'utilisateur pour son meilleur confort.

### Brève description des figures.

- Les figures 1A-1B illustrent un système d'enrôlement avec une carte biométrique de transaction selon un mode préféré de réalisation de l'invention;
- La figure 1C illustre un système 1C pour valider un enrôlement ;
- Les figures 2A-2B Illustrent les microcontrôleurs (MCU et SE) de la carte avec un exemple de configuration matérielle et logicielle ;
- La figure 3 illustre un fonctionnement et interaction des microcontrôleurs quand l'enrôlement physique (mémorisation) est effectué mais non activé ;
- La figure 4 illustre, selon un mode préféré, différentes étapes de la finalisation (verrouillage/ activation) une fois que des données biométriques ont été mémorisées et lors d'une transaction bancaire standardisée, telle que EMV;
- La figure 5 illustre une acquisition de sept empreintes qui sont juxtaposées (ou assemblées / combinées) en mémoire 25 du dispositif biométrique pour définir une empreinte de référence 40 (recomposée à partir de plusieurs portions empreintes digitales).
- La figure 6 illustre (selon un mode un peu moins préféré) une activation des données biométriques mémorisées dans le dispositif, à l'aide d'un téléphone mobile NFC, éventuellement relié à un serveur et une base de données (ou serveur) d'authentification.

### Description.

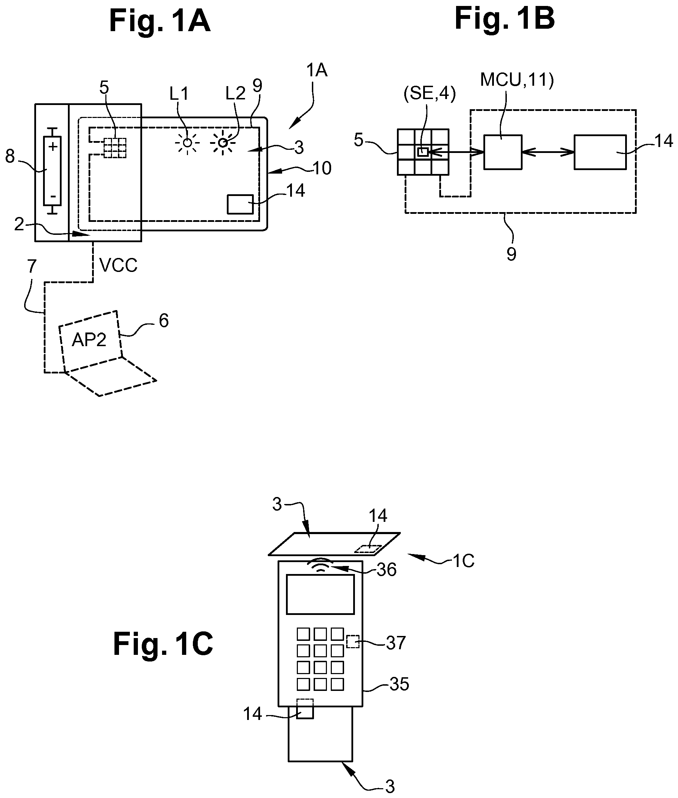

L'invention peut utiliser des éléments illustrées aux figures 1A et 1B correspondant à celles de la demande de brevet EP 18305594.6 du demandeur et incorporé par référence dans la présente description.

A la figure 1C est illustré un système 1C possible pour valider un enrôlement de données biométriques d'un titulaire dans un dispositif portable de saisie biométrique 3, selon un premier mode préféré de réalisation ou de mise en oeuvre du procédé de l'invention.

Il comprend le dispositif 3 de l'invention et un terminal de transaction 35 comportant une interface de communication sans-contact 36 et avec contacts électriques 37.
Le terminal 35 peut être de préférence relié à un serveur central d'un fournisseur de service tel que banque, télécommunication, d'un commerçant avec boutique en ligne, Le terminal peut être un téléphone intelligent. Le terminal peut être un POS (terminal bancaire).

L'enrôlement logique (ou validation d'enrôlement) est, de préférence, mis en oeuvre lors de transactions utiles de l'utilisateur effectuées entre son dispositif portable 3 et un terminal de transaction 35.

Par transaction on entend de préférence une transaction électronique bancaire notamment standardisée EMV ou d'autres échanges électroniques entre un dispositif biométrique de transaction et l'extérieur [Terminal sur le lieu de vente (POS), distributeur de billets (ATM), bornes d'accès à un immeuble, à un service de transport, de paiement..., tout autre transaction via diverses applications logicielles)]

Par motif biométrique, on entend des données biométriques propres à l'utilisateur, telles qu'un motif d'empreinte digitale, l'iris de l'oeil, son ADN, sa voix, etc. Dans la présente description, le motif biométrique peut également équivaloir ou désigner indifféremment des minuties ou des empreintes ou plus généralement des données biométriques de toute nature.

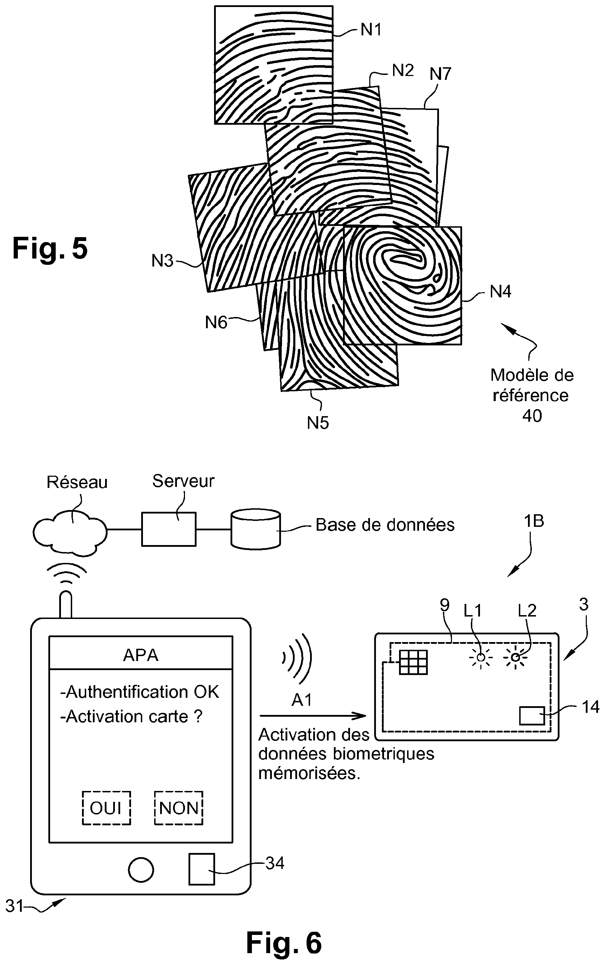

Lorsque suffisamment de motifs (minuties ou empreintes) sont mémorisés, (Fig. 5) ils constituent ensemble un modèle de référence 40 auquel on peut se référer pour s'authentifier par comparaison avec un autre motif fraichement capturé avec un certain taux de similitude.

Alternativement, l'invention peut prévoir de se satisfaire, (même si le modèle de référence n'est pas entièrement établi), d'un certain niveau d'adéquation entre des données déjà mémorisées et des données fraîchement acquises. Le taux d'adéquation peut être variable et dépendre du niveau de sécurité au choix de l'homme de l'art. Par exemple, une seconde empreinte fraichement capturée peut avoir déjà suffisamment de points de similitude ou recoupement avec une seconde empreinte préalablement mémorisée. Ainsi, dans la description le terme authentification peut équivaloir « adéquation » dans le sens ci-dessus.

On peut désigner indifféremment le modèle de référence par motif (ou minuties ou empreintes) de référence. De même, les termes verrouillage, activation, validation, finalisation sont équivalents. Ils représentent une étape apportée par l'invention et réalisée dans différentes conditions ou environnements ou niveaux de sécurité.

Par dispositif de transaction, on entend un dispositif portable de communication tel qu'une carte à puce électronique 3, une montre à puce électronique, un bracelet électronique communiquant notamment via des contacts électriques 5 et/ou en sans-contact via une antenne 9 dans un corps 10 de carte, selon une technologie de champ proche (NFC) ou RFID (radio frequency identity Device en anglais), Bluetooth TM, ou UHF. Le dispositif biométrique peut également comporter ou constituer une clé USB, un téléphone portable intelligent, un ordinateur, une tablette, un assistant personnel PDA.

L'enrôlement physique d'un utilisateur (acquisition des N empreintes) peut être effectué de plusieurs manières : au domicile à l'aide d'un connecteur (Fig. 1A), à l'aide d'un téléphone, dans une succursale de banque... ce qui le rend complexe. Dans l'exemple préféré, l'utilisateur peut s'enrôler physiquement à l'aide d'un connecteur élémentaire 2 (Fig. 1A). Son descriptif correspond à celui décrit dans la demande de brevet EP 18305594.6 du demandeur et incorporé par référence dans la présente description) et ne sera pas décrit davantage.

Le système 1A peut être classiquement configuré pour effectuer une mémorisation d'au moins un motif biométrique N1-N7 (fig. 5) dans une mémoire 25 ou registre du dispositif 3 via un capteur 14, ici un capteur d'empreinte digitale. Dans l'exemple, la puce P60 (SE de NXP peut être utilisé pour les cartes).

Selon un aspect du mode préféré pour effectuer l'enrôlement logique de l'utilisateur, le système 1C est configuré pour effectuer une activation (ou validation), de préférence sécurisée, d'au moins un motif biométrique en réponse ou en association à une première et une seconde authentification réussies du titulaire.

Selon le mode préféré de mise en oeuvre, le procédé comprend la réalisation d'une première authentification (ou adéquation) réussie de données biométriques d'un utilisateur par comparaison avec un modèle de référence 40 (ou des données biométriques) mémorisé(es) dans ledit dispositif 3.

La première authentification peut s'effectuer de différentes manières par contact ou sans-contact au cours (ou non) d'une transaction utilisant une application d'un service applicatif. Toutefois, il est préféré de l'effectuer en utilisation normale au cours d'une transaction utile avec une application d'un fournisseur de services (bancaires, de télécommunication, d'accès...).

Dans l'exemple, on peut considérer que l'utilisateur a fait suffisamment de saisies biométriques physiques pour constituer un modèle de référence (ou par exemple qu'il lui en manque une pour compléter son modèle de référence) et qu'il a besoin d'effectuer une transaction bancaire en mode sans-contact. Il présente donc sa carte 3 au terminal hybride (sans-contact et sans-contact) 35 en mettant son doigt sur le capteur 14 (Fig. 1C).

De préférence, la finalisation de l'enrôlement peut s'effectuer quand le modèle de référence 40 est constitué avec suffisamment de motifs ou données biométriques N1-N7 de manière à finaliser l'enrôlement. Les différents motifs peuvent être aussi mémorisés à chaque utilisation sans-contact de la carte par l'utilisateur jusqu'à constituer un modèle de référence fiable 40.

L'utilisateur peut être invité à chaque fois à terminer la transaction en mode contacts (faute d'enrôlement physique suffisant) et avec PIN par le terminal de paiement mobile POS jusqu'à ce que le modèle de référence 40 soit constitué.

Ainsi, selon l'invention, le dispositif peut être configuré de manière à effectuer une première authentification(ou adéquation) réussie de données biométriques d'un utilisateur par comparaison avec un modèle de référence 40 (ou données biométriques) mémorisé(es) dans ledit dispositif 3.

Dans le cas d'autres données biométriques telles que vocales, saisies par microphone dans le dispositif, le processus serait similaire.

Dans l'exemple, la première authentification est de préférence effectuée par communication des données biométriques de l'utilisateur au dispositif. Dans l'exemple, l'utilisateur pose son doigt sur le capteur d'empreinte du dispositif, tandis que ce dernier est alimenté en énergie.
Il est aussi configuré pour effectuer une seconde authentification réussie du titulaire, qui peut être mise en oeuvre par différentes manières connues de l'homme de l'art.

De préférence, le dispositif est configuré pour permettre une première authentification réussie au cours d'une première transaction sans-contact et la seconde authentification réussie dans le cadre d'une transaction à contacts.

L'alimentation en énergie de la carte peut être notamment avec batterie(s) ou condensateurs internes, ou via un lecteur à contacts électriques notamment d'un POS (exemple préféré) ou via un champ radiofréquence d'un lecteur NFC.

Selon une caractéristique du mode préféré de l'invention, le procédé prévoit une seconde authentification réussie, utilisant des données distinctes de la première authentification.

Cette seconde authentification réussie permettra de déclencher (ou est liée à) la réalisation de l'enrôlement logique des données biométriques de l'utilisateur ou l'activation d'au moins un motif biométrique et la finalisation de l'enrôlement.

De préférence, cette seconde authentification n'utilise pas les données biométriques du modèle de référence stockées dans la carte.
De préférence, l'invention prévoit d'utiliser un code PIN que seul connait l'utilisateur en principe et qui permet de l'authentifier au cours d'une transaction.

Alternativement, l'invention pourrait utiliser tout autre mode d'authentification tel qu'un mode vocal, signature dynamique sur un pavé de signature...

Selon une autre caractéristique du mode préféré de l'invention, le procédé prévoit une étape de contrôle d'informations de sécurité et/ou temporelles et/ou géographiques liées ou associées respectivement à chaque authentification et une étape de validation en cas de contrôle réussi.

En effet, les inventeurs considère que la sécurité est améliorée si la seconde authentification s'effectue, par exemple, dans un premier laps de temps très court après la première authentification (ou adéquation) ou si elle s'effectue au même lieu ou avec le même terminal. D'une manière générale, la seconde authentification est plus fiable si elle partage un même paramètre de contexte environnemental que la première authentification. Ce dernier paramètre aurait pu changer en cas de fraude et serait décelable.

Selon une caractéristique du mode préféré, lesdites informations de sécurité et/ou temporelles comprennent une information d'horodatage et l'étape de contrôle comprend un test pour savoir si le laps de temps séparant les première et seconde authentifications est inférieur ou égal à une durée prédéterminée.

Les informations d'horodatage peuvent constituer en elles-mêmes des informations temporelles ou de sécurité au sens de l'invention. Les informations d'horodatage peuvent comprendre l'heure et la date de la transaction et/ou des valeurs temporelles et/ou des valeurs de durée.

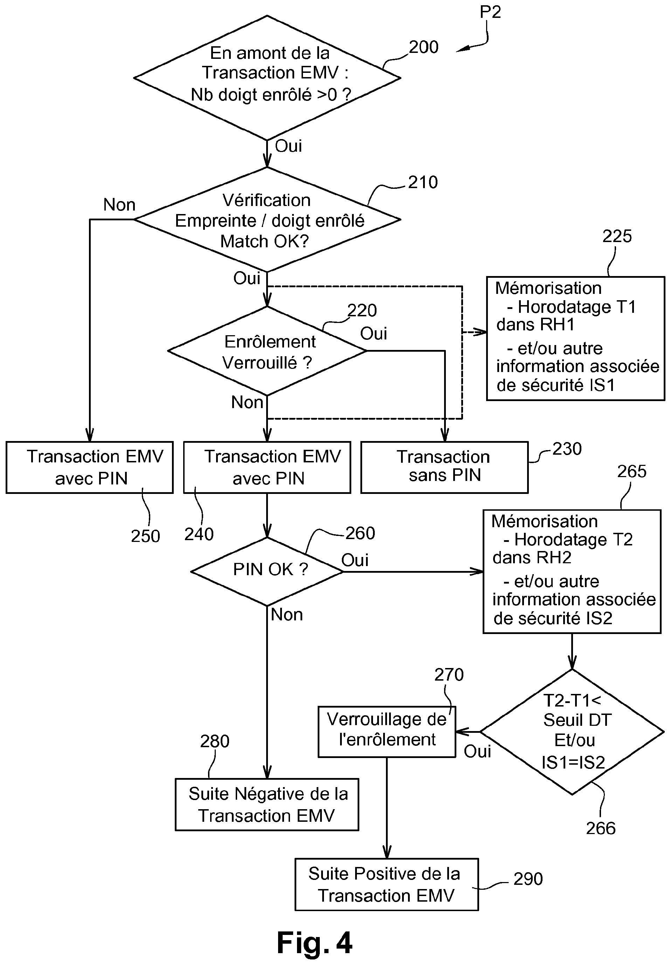

Ces informations d'horodatage peuvent provenir du terminal et/ou d'un compteur d'horloge du dispositif. Ces informations peuvent être associées respectivement à des première et seconde authentifications (ou adéquations) réussies comme décrit ultérieurement notamment à la figure 4.

Parmi les alternatives (ou exemples possibles) d'horodatage prévues par l'invention, la carte peut initier un compteur d'horloge sur la base d'une fréquence d'horloge CLK fournie par le terminal.

La carte peut mettre à zéro le compteur dès la première authentification et compter un nombre de pulsation d'horloge jusqu'à la seconde authentification. Ces pulsations équivalent à une durée.

La carte peut recevoir aussi des données de transaction, dans un message du terminal à la carte, indiquant l'heure et le jour de chaque authentification réussie.
La carte peut alors prélever ou extraire les informations d'horodatage provenant du terminal et correspondant à chaque (ou au moins) une authentification réussie.

Pour l'étape de contrôle, la carte peut ainsi déterminer la durée séparant les deux authentifications (ou adéquations) réussies et comparer à une durée prédéterminée pour savoir si le laps de temps séparant les première et seconde authentifications (ou adéquations) est inférieur ou égal à une durée prédéterminée comme décrit ultérieurement en relation avec la figure 4.

Dans l'exemple, le laps de temps est relativement court (moins d'une heure ou moins de 5 minutes). Il peut être compris de préférence par exemple entre 30 secondes et 2 mn voire 1 mn.

Ce laps de temps peut être déterminé par la durée d'une transaction complète ou d'une session d'échange entre un terminal notamment de paiement (POS, ATM...) et le dispositif biométrique. La session peut être par exemple être une session standardisée EMV entre une carte et un lecteur POS.

Ce laps de temps peut être calculé/déterminé à l'aide ou avec l'assistance du terminal ci-dessus.

Selon une caractéristique du mode préféré de l'invention, la seconde authentification s'effectue par contrôle de code PIN. Toutefois, une autre authentification n'utilisant pas le modèle (ou données) biométrique(s) 40 pourrait être envisagée telle que vérification de signature dynamique, vérification vocale.

Selon une autre caractéristique du mode préféré, le procédé peut comprendre une étape d'association d'information de sécurité. A chaque authentification (ou adéquation) L'information peut être de tout type mais de préférence liée au contexte de la transaction.

Elle peut être choisie parmi :
- le montant de la transaction,
- la devise de la transaction,
- un identifiant du terminal,
- un identifiant du marchand,
- le nom du marchand et sa localisation, et/ ou une données interne au dispositif, par exemple, le compteur interne d'application ATC "Application Transaction Counter").

Selon une caractéristique, le terminal peut proposer une seconde transaction à contacts, en cas d'échec de ladite première transaction sans-contact avec données biométriques du fait d'un enrôlement non encore validé et malgré une première authentification (ou adéquation) réussie.

Ainsi, par exemple, au cours d'une transaction bancaire sans-contact, un utilisateur non enrôlé logiquement (mais enrôlé physiquement parce que le modèle de référence est déjà constitué dans le dispositif mais pas finalisé ou validé) s'authentifie avec succès notamment avec son empreinte digitale ; Toutefois comme l'enrôlement logique n'a pas été finalisé, la transaction est mise en échec. Le dispositif n'envoie pas un signal positif de validation de l'authentification au terminal.

La procédure EMV requiert une seconde authentification alternative par code PIN pour valider une transaction bancaire, en cas d'échec de ladite première transaction sans-contact. Le terminal (POS) propose donc à l'utilisateur, une seconde transaction à contacts. Le POS conduit une seconde authentification par code PIN de manière connue.

Le dispositif peut fonctionner de préférence sans source d'énergie embarquée, avec uniquement l'énergie collectée du terminal NFC.

Toutefois, de manière moins préférée mais possible, la carte peut comprendre une batterie (une batterie ou des condensateurs de faible encombrement et/ou rechargeables) au moins pour assurer une partie ou totalité de l'enrôlement physique et/ou logique comprenant au moins la mémorisation de données biométriques.

Le système peut inclure éventuellement d'autres moyens de finalisation tels qu'un serveur d'authentification distant adapté pour effectuer la finalisation (enrôlement logique) ; Ces moyens de finalisation ci-dessus peuvent être configurés pour verrouiller / activer les données biométriques mémorisées, à l'aide d'un signal de validation envoyé au dispositif 3 et provenant de l'extérieur du dispositif, en réponse à une authentification de l'utilisateur.

Sur les figures 1A, 1B, le dispositif 3 (présenté ici en position d'enrôlement physique avec un connecteur 2) est une carte à puce de transaction notamment bancaire. De préférence, le dispositif comporte une fonctionnalité sans-contact, par exemple une interface radiofréquence (antenne 9) de proximité selon l'ISO 14443 et un microcontrôleur SE radiofréquence capable de décoder et/ou émettre des trames de communication radiofréquence.

Le dispositif (1) comprend de préférence une application bancaire EMV (P3), une application d'enrôlement (P1) et une application de contrôle (P4) du premier laps de temps (Dt) séparant les première et seconde authentifications et/ou une application de contrôle P4 de paramètre ou informations de sécurité visées ci-dessus.
Il peut comprendre aussi une valeur de seuil de durée « DT » entre deux authentifications réussies différentes à ne pas dépasser pour valider l'enrôlement.

Alternativement, le dispositif peut comprendre un espace mémoire ou registre RH1+2 dans lequel des informations (ou paramètres) de sécurité ou de contexte de la transaction liées ou associées à chaque authentification réussie sont mémorisées au moins provisoirement pour les besoins ou le temps de la validation de l'enrôlement.
Dans l'exemple, la carte à puce comprend une interface de communication à contacts 5 (ou bus ISO 7816) mais pourrait être alternativement tout objet portable notamment une montre, un bracelet et avoir une interface d'un type différent tel USB.

De préférence la carte est une carte à interface hybride à contacts 5 ISO 7816 et sans-contact ISO 14443 avec antenne 9 dans le corps de carte 10.

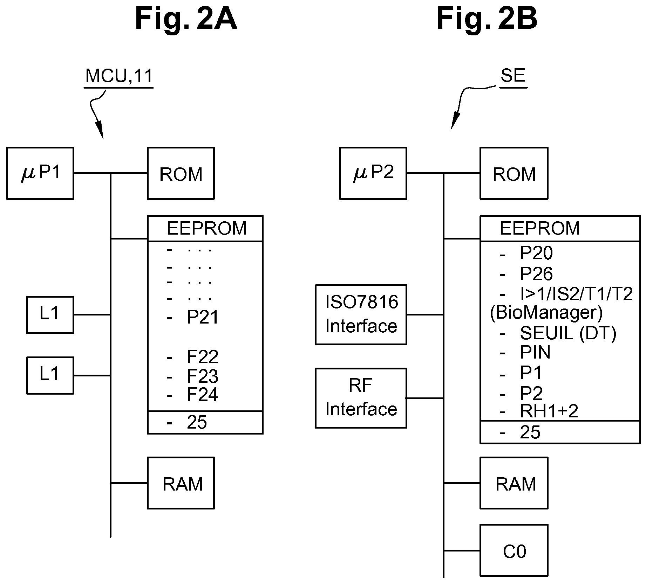

A la figure 2B, le dispositif 3 peut comporter un microcontrôleur de sécurité à puce électronique (SE ou 4), une première interface 5 / port de communication (notamment ISO 7816) reliée au microcontrôleur de sécurité (SE, 4), au moins un composant électronique périphérique (MCU, 11) connecté, via une seconde interface / port de communication, à l'élément de sécurité 4.
Le cas échéant, la totalité ou partie des fonctions du composant MCU, 11 peut être intégrée dans l'élément de sécurité ou inversement.

A la figure 1B, la carte est équipée ici d'un bornier de contacts 5 (référencé C1-C8 selon le standard ISO 7810), connectés à la puce SE, 4 via son bus de communication standard ISO-7816-3 (seules sont illustrées fig. 1C les lignes (RST) et (CLK). La carte 3 intègre un élément sécurisé SE, 4, comprenant un microcontrôleur ou microprocesseur µP2 (fig. 2B), sous forme de puce électronique de carte à puce standard. La puce SE, 4 est ici une puce hybride à contacts et sans-contact de référence P60D081 de chez la société NXP par exemple, mais pourrait être une puce simplement à contacts (moins préférée).

A la figure 2A, la carte peut comporter un composant périphérique MCU, 11 qui peut être ou non un microcontrôleur secondaire, ou un coprocesseur, esclave ou non, par rapport au microcontrôleur SE, 4. Le microcontrôleur SE, 4 peut être une puce bancaire, une puce d'opérateur de téléphonie, ou une puce multi-applicative.... Le composant MCU peut comprendre un microcontrôleur ou microprocesseur µP1, un générateur d'OTP (numéro à usage unique) ou d'autres fonctionnalités (génération de cryptogramme notamment pour un cryptogramme dynamique DCV), etc.). Le composant MCU 11, est relié à un capteur d'empreinte 14 affleurant en surface du corps de dispositif.

Le dispositif peut être configuré de manière à initier une mémorisation de motifs biométriques (enrôlement physique) de manière autonome avec un connecteur d'alimentation 2 externe dédié (figure 1A précédemment).

La puce SE peut contenir ici des applications de transaction notamment bancaires notamment selon le standard EMV, de télécommunication, d'accès et/ou autres P20; Elle peut contenir en mémoire le code PIN pour vérification ou alternativement une application de vérification de code PIN à distance sur un serveur dédié notamment bancaire.
En pratique, selon le mode préféré de l'invention, l'utilisateur effectue le début de l'enrôlement (mémorisation des motifs biométriques) à son domicile et finalise l'enrôlement (activation des motifs mémorisés) ultérieurement à la première occasion d'échanger de données avec l'extérieur. Cela peut être lors d'une transaction standardisée et de manière transparente (ou quasi transparente) pour l'utilisateur.

L'utilisateur peut aussi préférer un enrôlement physique progressif à chaque transaction qu'il a besoin d'effectuer en mode sans-contact et qu'il complète par une authentification par code PIN ou autre.

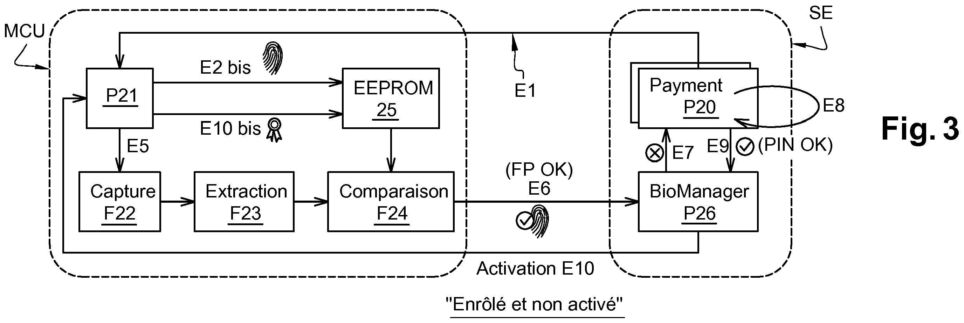

Sure les figures 2A, 2B, 3, on décrit des éléments d'architecture matérielle et logicielle de la carte ci-après. La carte peut comprendre de manière connue une application logicielle ou (ou programme applicatif), par exemple une application biométrique bancaire notamment de paiement (P20), ou de télécommunication ou d'accès; Il peut s'agir d'application spécifiée par les schémas de paiement, permettant d'authentifier l'utilisateur par une présentation du PIN ou par une reconnaissance biométrique (ex. reconnaissance d'une empreinte digitale) ou vice versa.

La carte peut comprendre de manière connue (fig. 3):
- une application P21 de gestion des données biométriques enrôlées / mémorisées notamment dans la puce MCU (également nommé gestionnaire des données biométriques);
- une fonction (ou application) F22 « Capture » mettant en oeuvre un processus déclenchant l'acquisition d'une image ou données biométriques sur le capteur biométrique 14 ;
- une fonction (ou application) F23 « Extraction » mettant en oeuvre un processus de conversion des données brutes (images) en des données compressées (ou minuties) pour accélérer la reconnaissance ;
- une fonction (ou application) F24 « Comparaison » mettant en oeuvre un processus de reconnaissance de l'image fraichement acquise ou capturée par rapport à l'image d'enrôlement (ou modèle de référence 40) mémorisée préalablement ;
- un registre 25 ou une mémoire de sauvegarde EEPROM de données biométriques enrôlées activées ou non activées.

Dans l'exemple, l'invention propose que la carte 3, selon un mode préféré de réalisation, comprenne en outre une application P26 (gestionnaire d'enrôlement de données biométriques ou « BioManager »). Ce gestionnaire d'enrôlement P26 à l'avantage de s'intercaler ou de coopérer étroitement avec l'application bancaire P20, (ici dans le microcontrôleur SE, 4 mais pourrait être ailleurs, notamment dans le MCU, 11). Le programme applicatif P26 (Biomanager) peut être notamment configuré pour coopérer avec P20 (paiement) de manière à déterminer comment la transaction doit se dérouler (avec ou sans PIN) selon l'état ou des informations d'enrôlement de sa connaissance (ou porté à sa connaissance) ;

Le programme gestionnaire Biomanager P26 peut également coopérer avec P20 pour verrouiller / activer les données biométriques mémorisées au moment opportun (notamment quand toute la sécurité requise est satisfaite : exemple suite à une double authentification).

L'application P26 « BioManager » est ici en étroite relation de communication ou coopération avec l'application de paiement P20 :
- L'application P26 « BioManager » peut notamment permettre à l'application de paiement biométrique P20 de récupérer le résultat (OK, ou le score de reconnaissance de données biométriques capturées lors d'une authentification) de l'identification (ou authentification) biométrique effectuée par la puce de collecte biométrique, ici la puce ou microcontrôleur MCU, 11.
- Selon une configuration spécifique du mode préféré de l'invention, la puce SE, 4 peut comprendre une fonction (ou application ou étape) 9 permettant d'envoyer des informations (ou commandes) au gestionnaire d'enrôlement des données biométriques « BioManager » P26, quand le PIN est vérifié lors d'une transaction quelconque notamment de type « EMV » dans l'application de paiement P20.
- L'application de paiement P20 peut aussi recevoir une information E4 du BioManager P26 indiquant que le modèle de référence 40 n'est pas encore activé ou validé (P26 étant averti de cet état par P21) ;
- De même, P20 peut recevoir une information E7 indiquant que les données biométriques sont mémorisées (enrôlées), non encore activées et concordent ou non avec celles fraîchement acquises lors d'une session de transaction, (P26 étant averti par le MCU).
- L'invention peut prévoir également une fonction (application ou étape) E10 sur fig. 3 ou 260 sur fig. 6) déclenchée ici par P26, permettant d'informer le programme gestionnaire P21 des données biométriques enrôlées pour activer (E10, E10bis) l'enrôlement quand le PIN est vérifié (260) et qu'une reconnaissance biométrique réussie (270, E6) est intervenue au cours d'une même session d'échange (uniquement si la mémorisation n'est pas encore activée). Cette fonction E10 est gérée par le gestionnaire « BioManager » P26.

L'activation E10 peut être envoyée de préférence par P26 lorsque l'application de contrôle a déterminé que les informations (ou paramètres) de sécurité selon l'invention sont réunies pour les deux authentifications réussies. Par exemple, le programme P26 peut recevoir le message E6 (FP OK ou données biométriques OK) et le message E9 (PIN OK) intervenu pendant un laps de temps qui est inférieur au seuil de durée « DT »
- L'invention peut prévoir également une fonction (application ou étape) permettant la mise à jour (E10bis) des données biométriques enrôlées / mémorisées dans la mémoire 25, à réception par le gestionnaire P21 d'une commande d'activation E10 de ces données biométriques, ladite commande E10 étant émise par le gestionnaire d'enrôlement P26 (BioManager).

On va décrire maintenant le fonctionnement de l'invention (Verrouillage / finalisation / activation de l'enrôlement par des étapes du procédé illustrées à la figure 4 et en relation avec le système 1A, 1C (figures 1A et 1C, 3) le dispositif étant une carte 3.

Concernant la situation relative à la fig. 3 (minuties enrôlées non activées) :
- A l'étape E1, au début d'une transaction, en l'occurrence ici une séquence de transaction bancaire EMV à l'aide d'un terminal de paiement sur un lieu de vente (POS), la puce SE, 4 interroge ou consulte le microcontrôleur MCU pour connaitre l'état d'enrôlement, notamment savoir s'il y a des données biométriques mémorisées dans le registre 25.

Par exemple, la puce SE peut envoyer directement, via l'application P20, une commande E1 telle qu'une requête de comparaison de données biométriques captées sur le capteur 14, au microcontrôleur MCU, 11, (La commande peut être initiée également via le gestionnaire (Biomanager) P26;
- A l'étape E2bis, le gestionnaire de minuties P21 a constaté dans sa requête auprès du registre 25 que des minuties sont enrôlées / mémorisées dans le registre 25 mais non activées (ou enrôlement non finalisé);
- A l'étape suivante E5, le MCU ou gestionnaire P21 des minuties enrôlées, fait donc procéder à un processus de capture de données biométriques nouvelles via l'application de capture 22 suivie d'extraction de minuties nouvelles et de comparaison 24 avec les minuties mémorisées et non activées, préalablement contenues dans le registre 25.
- A l'étape suivante E6, le résultat positif (FP OK ou données biométriques OK) de la comparaison est transmis à l'application gestionnaire de l'enrôlement P26 « BioManager » ;
- Le Biomanager P26 peut à ce moment-là prélever une valeur d'horodatage ou requérir une autre information de sécurité associée (comme aux étapes 225 fig.4) ;
- A l'étape E7, Biomanager P26, à son tour, informe l'application de paiement 20 que la transaction doit s'effectuer encore avec le PIN (car la mémorisation est non activée). Cette authentification constitue également et avantageusement une mesure de sécurité transparent pour l'utilisateur, permettant une activation / validation des données biométriques);
- A l'étape suivante E8, l'application de paiement P20 procède à la transaction EMV en mettant en oeuvre un PIN (car les minuties sont non activées ou l'enrôlement est non finalisé) - (E8 peut correspondre à l'étape 240 fig. 6);
- A l'étape suivante E9, quand le PIN a été vérifié au cours de la transaction EMV, une information représentative par exemple « PIN OK » est envoyée par l'application de paiement 20 ou par la puce sécurisée SE, 4 au gestionnaire d'enrôlement P26 de données biométriques « BioManager » ;
- A l'étape suivante E10, dès que le gestionnaire de données biométriques P26 possède, (dans la même session de transaction ou pas), les deux informations E6 et E9 (FP OK et PIN OK) comprenant le résultat positif de la comparaison biométrique et celui positif du code PIN, alors P26 peut faire parvenir une requête d'activation E10 (de contrôle ou de finalisation) de l'enrôlement au microcontrôleur MCU, notamment au gestionnaire P21 de minuties enrôlées ;
- Alternativement, le gestionnaire Biomanager peut effectuer comme précédemment des étapes identiques à celles de l'étape 265 fig. 4 et conditionner la validation à un test 266 fig. 4 ;
- A l'étape suivante, en cas de test 266 positif, le MCU ou le gestionnaire P21 met à jour les informations des minuties enrôlées (non activées) en les activant, (par exemple en mémorisant dans le registre associé aux minuties, une information d'activation ou de finalisation ou un drapeau d'activation) (opération identique à l'étape 270 fig. 4).

Grâce à cette activation la transaction suivante 230 peut désormais être effectuée à l'aide de données biométriques capturées sur l'instant et sans PIN (voir fig. 4).

Plus précisément au cours du procédé, les opérations utilisateurs sont indiquées ci-après (fig.4). Ces opérations correspondent à des étapes du procédé ou d'un programme informatique P2 exécuté dans le dispositif 3.
Un utilisateur détient une carte biométrique sur laquelle il a effectué au moins un enrôlement physique (au moins une mémorisation de données biométriques) à l'aide du connecteur (fig. 1A, 1B) notamment à domicile.
Ensuite, il réalise une transaction sans-contact avec le terminal 35 (POS) de la figure 1C:
- Il place son doigt sur le capteur 14 et présente la carte 3 au POS 35; (Il fait un test 200 pour savoir s'il y a au moins une mémorisation de données biométriques) ;
- La carte effectue la comparaison avec succès (test 210) car il y a au moins un doigt enrôlé physiquement (test 200). - A l'étape 225, comme la comparaison a été réussie, selon une caractéristique du mode préféré de l'invention, la carte mémorise cette information de succès dans une mémoire ou registre RH1, en l'associant à une information de sécurité (ici temporelle T1). Elle peut simplement aussi mémoriser un premier horodatage T1 dans une mémoire RH1 du microcontrôleur SE suite ou en réponse à cette authentification réussie.
Alternativement, toute autre information de sécurité IS1 expliquée précédemment au sens de l'invention, peut être mémorisée alternativement ou cumulativement à l'horodatage (telle la valeur ATC) dans la carte.

L'information temporelle confère de la sécurité à l'enrôlement. Elle est sûre notamment quand elle provient d'un terminal (POS) accrédité par le fournisseur de service en l'occurrence la banque.
- Toutefois au test 220, la carte détecte que l'enrôlement n'est pas encore validé (ou verrouillé) et du coup rejette la transaction en proposant une transaction avec PIN (étape 240);
- A l'étape 240, le POS propose une transaction alternative par contacts (de repli ou par défaut) selon le standard EMV ce qui génèrera implicitement une autre information temporelle (un horodatage).
- Ensuite, l'utilisateur insère la carte dans le terminal ou lecteur (POS); Il saisit son code PIN, notamment sur le terminal 35 ;
- A l'étape 260, ce code PIN a pu être vérifié positivement par la carte 3; et le programme P2 de la carte se branche à l'étape 265 ;
- A l'étape 265, comme la comparaison a également été réussie, selon une caractéristique du mode préféré de l'invention, la carte mémorise cette information de succès en l'associant à une information de sécurité (ici également temporelle T2). Le programme P2 peut simplement aussi mémoriser un second horodatage T2 dans une mémoire RH2 du microcontrôleur SE suite ou en réponse à cette seconde authentification réussie avec PIN.
Alternativement, toute autre information de sécurité IS2 expliquée précédemment au sens de l'invention, peut être mémorisée dans la carte alternativement ou cumulativement à l'horodatage (telle la valeur ATC).
- A l'étape de test 266, la carte calcule la durée (T2 -T1) séparant les deux authentifications avec les deux informations temporelles T1 et T2 correspondants aux deux transactions (sans-contact et contacts) et la compare à la durée seuil « DT » (durée prédéterminée configurable);
- Si la durée calculée (T2-T1) est inférieure par exemple, à une minute, alors la carte se branche à l'étape de verrouillage 270 ;
- A l'étape 270, le programme verrouille ou effectue la validation de l'enrôlement logique et achève tout l'enrôlement (physique et logique).
Ensuite, la transaction peut s'effectuer (290) selon le standard EMV.

Comme indiqué, des horodatages peuvent être complétés par tout autre donnée ou information de sécurité permettant notamment d'associer des transactions sans-contact et à contacts de manière qu'il soit possible de détecter une possible usurpation de carte entre les deux instants.

L'invention peut combiner un horodatage avec un ou plusieurs données de sécurité pour maximiser la flexibilité offerte à la banque dans la définition de règles destinées à lutter contre les risques d'usurpation d'identité.

Le procédé peut mettre en oeuvre un message d'information de l'application logicielle de contrôle P2 vers l'application logicielle P26 (Biomanager) ou inversement quand les conditions de contrôle d'informations de sécurité sont respectées à l'étape 266.

L'application logicielle P26 (fig. 3), étant informée de toutes les conditions réunies (FP OK), PIN OK et seuil respecté (et/ou IS1 = IS2), elle peut déclencher ensuite l'activation E10 de l'enrôlement en enregistrant une indication correspondante dans le gestionnaire P21.

A la figure 6, on décrit une activation A1 des données biométriques mémorisées dans le dispositif 3 à l'aide d'un téléphone mobile 31 NFC. Une première authentification est effectuée par l'utilisateur à l'aide de son téléphone mobile et une seconde à l'aide de la carte.

Le téléphone peut comprendre des moyens de saisie biométrique tel un capteur d'empreinte 34 ou autre (caméra / photographie du visage.... Le téléphone peut éventuellement être relié à un serveur via un réseau de télécommunication et une base de données d'authentification comprenant des données biométriques (ou données représentatives) préalablement capturées de l'utilisateur. Une authentification peut être effectuée par notamment par code PIN sur le clavier du téléphone.

Pour cela, l'utilisateur télécharge une application d'authentification / activation dédiée « APA » sur une boutique en ligne à l'aide de son téléphone intelligent 31 doté d'une fonction de communication de proximité (NFC) ; puis il s'authentifie dans l'application dédiée APA par tout moyen notamment à l'aide d'une saisie de données biométriques par exemple, une photographie du visage ou une empreinte de doigt à l'aide du capteur 34.

Le téléphone interroge la base de données (ou une base interne) via l'application APA pour comparer les données fraichement capturées (ou une valeur représentative sécurisée avec des minuties capturées (ou des valeurs représentative des minuties) mémorisées dans la base de données.

Le cas échéant, les données biométriques (ou des valeurs représentatives équivalentes) peuvent être mémorisées dans le téléphone grâce à l'application dédiée APA pour effectuer directement en direct une authentification et activation.

En cas d'authentification réussie, l'application effectue l'équivalent de l'étape 225 (horodatage T1 et/ou IS1) puis prompt l'utilisateur de placer la carte à puce 3 de transaction sous ou sur son téléphone avec le NFC actif et avec son doigt sur le capteur de la carte.

L'application du téléphone « APA » peut signaler à l'utilisateur que la communication avec la carte biométrique a été établie et peut mémoriser les données T1 ou IS1 dans la mémoire RH1 de la carte 3 par une communication notamment NFC.

Le carte 3 étant alimentée par le mobile, elle peut aussi capturer des données biométriques (notamment d'empreinte) pour les comparer à celles préalablement mémorisées ; Si la comparaison est positive (FP OK), la carte peut effectuer l'équivalent de l'étape 265 (fig. 4), pour mémoriser un horodatage T2 et/ou IS2 ;

La carte peut alors effectuer l'équivalent du test 266 pour savoir si les deux authentifications ont bien été effectuées dans un laps de temps autorisé et/ou avec des informations associées de sécurité adéquates;
Si le test équivalent à 226 est positif, elle peut procéder à la validation ou au verrouillage des empreintes enrôlées (ou mémorisées) et finaliser l'enrôlement (équivalent à 270) à l'aide de l'application de son téléphone (On suppose que le modèle de référence est suffisamment complet).

Si le modèle n'est pas complet, les données biométriques sont conservées et ajoutées aux précédentes.

Le cas échéant, l'utilisateur peut faire saisir d'autres données biométriques dans la foulée qui auront un autre horodatage Tn ou autres informations ISn.
Si les valeurs communiquées sont toujours dans le laps de temps autorisé et/ou si les informations sécurisées conviennent, alors la carte pourra à nouveau tenter et ainsi de suite de valider l'enrôlement s'il y a suffisamment de données mémorisées pour constituer un modèle de référence.

La carte peut renvoyer un signal à l'application mobile APA dédiée qui informe l'utilisateur du succès de la procédure de verrouillage / activation.

Alternativement, il est aussi possible à l'inverse d'effectuer d'abord une reconnaissance d'empreinte dans la carte à un instant T1, puis effectuer une seconde authentification par PIN ou biométrique via le mobile et/ou le réseau à un instant T2 et dans le cas favorable transmettre un signal correspondant à la carte d'une seconde authentification.
La carte recevant deux authentifications réussies dans un délai très court T2 - T1 inférieur à un délai DT seuil, elle peut verrouiller l'enrôlement.
La carte peut recevoir une autre information de sécurité alternativement ou cumulativement à un horodatage.

Par exemple, elle peut recevoir lors d'une alimentation NFC par mobile une information de localisation GPS (GPS1) associée à une première authentification par données biométrique directement dans la carte et elle peut recevoir une information d'authentification réussie du mobile avec une information de sécurité consistant en une information de localisation GPS2.
De préférence, la session de validation de l'acquisition des motifs et donc de finalisation de l'enrôlement peut s'effectuer au cours d'une seconde session d'échange (ou de communication) de données avec le dispositif (distincte de la première) et intervenant dans un délai très court et/ou avec une information de sécurité au sens de l'invention.

La seconde session peut être de préférence relative à une transaction standardisée ou une transaction mettant en oeuvre un service de transaction (transport, paiement, accès, authentification...).
L'authentification avec l'empreinte biométrique permet de faire le lien entre les deux sessions d'échange distinctes (discontinues entre-elles) qui ont pu être réalisées à des périodes séparées dans le temps (heures, jours) ou l'espace (lieux différents domicile et agence bancaire) voire le contrôle. L'authentification garantit que l'utilisateur ayant effectué l'acquisition est le même que celui effectuant le verrouillage.

Le verrouillage utilise un double facteur d'authentification l'une biométrique avec une information de sécurité associée pour s'assurer que l'utilisateur est le même et une autre authentification (notamment par code PIN réussie) associée avec une autre information de sécurité.

Le contrôle de ces deux authentifications réussies et de l'information de sécurité associée aux deux authentifications réussies permet de mieux garantir la sécurité de l'enrôlement logique contre la fraude.

L'information d'authentification biométrique réussie provenant du MCU (par exemple gestionnaire de minuties) et/ou l'autre authentification (par exemple par PIN) provenant de l'application de transaction P20, sont reçues par le gestionnaire d'enrôlement P26 « BioManager ». Ce dernier déclenche le verrouillage ou activation des données biométriques (ici via le gestionnaire d'enrôlement P21 de données biométriques).

Le gestionnaire d'enrôlement « Biomanager » a également pour fonction de recevoir une information de présence de données biométriques mémorisées mais non-activées, notamment du MCU pour en réponse informer l'application de transaction P20 de poursuivre la transaction de manière habituelle ici avec une authentification avec PIN code puisque l'enrôlement n'est pas finalisé (données biométriques non activées).

Le gestionnaire d'enrôlement P26 « Biomanager » a également pour fonction (notamment dans l'exemple à la suite de la mise en oeuvre de la fonction ci-dessus), de recevoir / détecter une information d'authentification biométrique réussie et/ou information d'authentification avec code PIN réussie de l'application de transaction pour, en réponse, activer les données biométriques non encore activées.

## Revendications

1. Procédé de validation d'un enrôlement de données biométriques dans un dispositif portable (1) de saisie biométrique, le procédé mettant en oeuvre au cours de transactions avec un terminal de transaction (31, 35) :
- une première authentification réussie (210) de données biométriques d'un utilisateur par comparaison avec un modèle de référence ou des données mémorisé(es) dans ledit dispositif,
- une seconde authentification réussie (260), utilisant des données distinctes (PIN) de celles (40) de la première authentification,
caractérisé en qu'il comprend une étape de contrôle (266) d'informations de sécurité (IS1, IS2) et/ou temporelles (T1, T2) et/ou géographiques (GPS1, GPS2) liées ou associées respectivement à chaque authentification réussie (210, 260) et une étape de validation (270) en cas de contrôle réussi.

2. Procédé selon la revendication précédente, caractérisé en que lesdites informations de sécurité (IS1, IS2) et/ou temporelles comprennent une information d'horodatage (T1, T2) et l'étape de contrôle comprend un test (266) pour savoir si le laps de temps (T2-T1) séparant les première et seconde authentifications est inférieur ou égal à une durée prédéterminée (DT).

3. Procédé selon la revendication précédente, caractérisé en que lesdites informations d'horodatage (T1, T2) proviennent du terminal (32, 35) et/ou d'un compteur d'horloge (CO) du dispositif, lesdites informations étant associées respectivement à des première et seconde authentifications réussies.

4. Procédé selon l'une des revendications précédentes, caractérisé en que la seconde authentification (260) s'effectue par contrôle de code PIN.

5. Procédé selon l'une des revendications précédentes, caractérisé en que ladite première transaction est en sans-contact (36, 9) et la seconde transaction est avec contacts électriques (5, 37).

6. Procédé selon l'une des revendications précédentes, caractérisé en que les informations temporelles (T1, T2) comprennent l'heure et la date de la transaction et/ou des valeurs de durée (T2-T1).

7. Procédé selon l'une des revendications précédentes, caractérisé en qu'il comprend une étape d'association d'information de sécurité (IS1, IS2) choisies parmi le montant de la transaction, la devise de la transaction, un identifiant du terminal, un identifiant du marchand, le nom du marchand et sa localisation, ou une données interne au dispositif choisie parmi le compteur interne d'application (ATC).

8. Procédé selon l'une des revendications précédentes, caractérisé en que le terminal propose une seconde transaction à contacts (240), en cas d'échec (220) de ladite première transaction sans-contact du fait d'un enrôlement non encore validé et malgré une première authentification réussie (210).

9. Procédé selon l'une des revendications précédentes, caractérisé en que ledit dispositif (1) comprend une application bancaire EMV (P3), une application d'enrôlement (P1) et une application de contrôle (P4) dudit laps de temps (Dt).

10. Système (1B, 1C) de validation d'un enrôlement de données biométriques dans un dispositif portable (3) de saisie biométrique, ledit système étant configuré pour effectuer, au cours de transactions avec un terminal de transaction (31, 35) :
- une première authentification réussie (210) de données biométriques d'un utilisateur par comparaison avec un modèle de référence (40) ou des données mémorisé(es) dans ledit dispositif,
- une seconde authentification réussie (260), utilisant des données distinctes (PIN) de celles (40) de la première authentification,
caractérisé en qu'il est configuré (P2, P26)) pour effectuer une étape de contrôle (266) d'informations de sécurité et/ou temporelles et/ou géographiques liées ou associées respectivement à chaque authentification, et pour effectuer ladite validation d'enrôlement en cas de contrôle réussi.

11. Système selon la revendication précédente, caractérisé en que lesdites informations de sécurité (IS1, IS2) et/ou temporelles comprennent une information d'horodatage et en ce qu'il est configuré pour déterminer si le laps de temps (T2-T1) séparant les première et seconde authentifications est inférieur ou égal à une durée prédéterminée (DT).

12. Système selon la revendication précédente, caractérisé en que lesdites informations d'horodatage proviennent du terminal (31, 35) et/ou d'un compteur d'horloge (CO) du dispositif (3), lesdites informations (IS1, IS2) étant associées respectivement à des première (210) et seconde authentifications (260) réussies.

13. Système selon l'une des revendications 10 à 12, caractérisé en qu'il est configuré pour mémoriser (RH1, RH2) une première information de sécurité (IS1) et/ou temporelle (T1, T2) et/ou géographique (GPS1, GPS2) communiquée(s) par ledit terminal (31, 35) et/ou le dispositif (3) et associée(s) à une première (210) et seconde (260) authentifications réussies.

14. Système selon l'une des revendications 10 à 13, **caractérisé en ce que** ledit dispositif (3) sans-contact est choisi parmi une carte à puce, un appareil à puce portable, une montre électronique, un bracelet.

15. Système selon l'une quelconque des revendications 10 à 14, **caractérisé en ce que** le terminal (31, 35) comprend un lecteur NFC choisi parmi un téléphone mobile, une montre électronique NFC, un terminal mobile de paiement bancaire (POS), un terminal bancaire (ATM).
